# EUROPEAN PATENT APPLICATION

(11) **EP 1 770 887 A1**
(43) Date of publication of application: **04.04.2007**
(21) Application number: 05766445.0
(22) Date of filing: 21.07.2005
(51) Int. Cl.: H04J 14/00, H04J 14/02, H04B 10/00, H04B 10/04, H04B 10/06, H04B 10/142, H04B 10/152

(54) **OPTICAL SIGNAL TRANSMISSION APPARATUS, SYSTEM AND METHOD**

(30) Priority: 22.07.2004 JP 2004214809
(71) Applicant: NIPPON TELEGRAPH AND TELEPHONE CORPORATION, Tokyo 100-8116 (JP)
(72) Inventor: KIKUSHIMA, Koji, NTT Intellectual Property Center, Tokyo 180-8585 (JP); IKEDA, Satoshi, NTT Intellectual Property Center, Tokyo 180-8585 (JP); MORITA, Akihiro, NTT Intellectual Property Center, Tokyo 180-8585 (JP)
(74) Representative: Beresford, Keith Denis Lewis
(86) International application number: PCT/JP2005/013366
(87) International publication number: WO 2006/009197

(57) **Abstract**

According to the present invention, an apparatus, a system and a method for transmitting a FM batch converted signal and another signal on the same optical fiber can be provided. For example, a first signal such as CATV signal may be FM converted in batch. This converted signal may then be frequency-multiplexed with a second signal such as BS/CS satellite broadcasting RF signal to transmit over optical fiber as an optical signal. The optical signal transmitted via the optical fiber is photoelectrically converted by a single photo-receiving element and is frequency-separated by a filter after passing through a preamplifier. The frequency-separated, FM batch converted signal is FM-demodulated and restored to the first signal, and the frequency-separated second signal is converted to an IF signal by a BS/CS converter. With appropriate setting of the center frequency of the FM batch converted signal, the influence by spurious interference can be minimized.

## Description

### Technical Field

The present invention relates to transmission of a broadband signal with an optical signal, specifically to a technique for simultaneous transmission of a frequency-multiplexed first signal and a second signal through a same optical fiber. In particular, the present invention relates to a technique for transmission of video signals such as cable television (CATV) signals and video signals such as BS or CS satellite broadcast signals over the same optical fiber line.

### Background Art

With the recent advancement of broadband-ization through optical fibers, provision of various services exploiting the broadband characteristic of optical fibers is expected. As one of such services, provision of multi-channel video signals is anticipated, and development for an efficient transmission scheme through an optical fiber is desired.

In a video transmission system for cable television (CATV) and the like, a scheme for frequency-division multiplexing of various multi-channel video signals, in addition to VHF-band and UHF-band terrestrial video signals, within a frequency band of 90 to 770 MHz is used for transmission. In this scheme, when transmitting along with BS or CS (BS/CS) satellite broadcast video signals, the frequency of the BS/CS signals may be converted into the frequency band of the CATV signals of 90 to 770 MHz for transmission.

The original frequency of BS/CS satellite broadcast video signals is in radio frequency (RF) in an aerial wave emitted from a satellite, and typically in 11.7 to 12.8 GHz. Generally, this RF signal is received by a BS/CS antenna, and converted to an intermediate frequency (IF) by a BS/CS converter to obtain signals at 1030 to 2070 MHz. The signals occupy a bandwidth of approximately 1040 MHz, which cannot be transmitted directly in the CATV frequency band of 90 to 770 MHz. Therefore, to transmit the entire band of the BS/CS signals, a bandwidth compression may be required by re-modulating the BS/CS satellite broadcast video signal modulated in the original modulation format such as FM, TC8PSK, QPSK or BPSK, to convert it to AM-VSB or QAM.

However, a problem exists in that if the BS/CS signal is to be compressed and frequency-converted to the CATV signal frequency band of 90 to 770 MHz, a commercially available BS/CS tuner may not be used. In general, input frequency of a commercially available BS/CS tuner is at an IF frequency band (1030 to 2070 MHz), and in these days, the BS/CS tuner is often incorporated in a television set and the like. Therefore, it is desirable to provide the BS or CS video signals to a subscriber at this IF frequency.

As a method for transmitting CATV signals at 90 to 770 MHz through an optical fiber line, a method is known in which a laser is intensity-modulated with the CATV signals for transmission. This method is recommended as ITU Standard J.186 (Non-Patent Document 1).

With an adoption of optical fibers, broadband transmission going beyond the CATV signals with 90 to 770 MHz can be realized. Specifically, the IF frequency band (1030 to 2070 MHz) of the BS/CS signals can be frequency-multiplexed with the frequency band (90 to 770 MHz) of the CATV signals. In this case, the overall frequency band is 90 to 2070 MHz, which makes it possible to provide a subscriber with the CATV video signals as well as with the BS or CS video signals.

However, such transmission scheme using intensity modulation has an inherent problem of a poor receiving sensitivity. Consequently, a scheme has been invented in which the CATV signals with 90 to 770 MHz is batch-converted to a broadband frequency-modulated signal with a center frequency of approximately 3 GHz and an occupied frequency bandwidth of 6 GHz, i.e., with an occupied frequency of 0 to 6 GHz, which is known as an FM batch conversion scheme (Patent Documents 1 and 2). According to this scheme, the receiving sensitivity can be improved because of the broadband gain (Non-Patent Document 3). This scheme is standardized by ITU
(Non-Patent Document 2).

However, a problem arises when multiplexing the CATV signals and the BS/CS signals in frequency by this FM batch conversion scheme based on the ITU standard. Specifically, a frequency-modulated signal obtained by FM converting the CATV signals in batch (hereinafter also referred to as an "FM batch converted signal") occupies the frequency bandwidth of 0 to 6 GHz. On the other hand, the IF frequency band of the BS/CS signals is 1030 to 2070 MHz, which makes a problem of overlapping with the frequency band (0 to 6 GHz) of the FM batch converted signal.

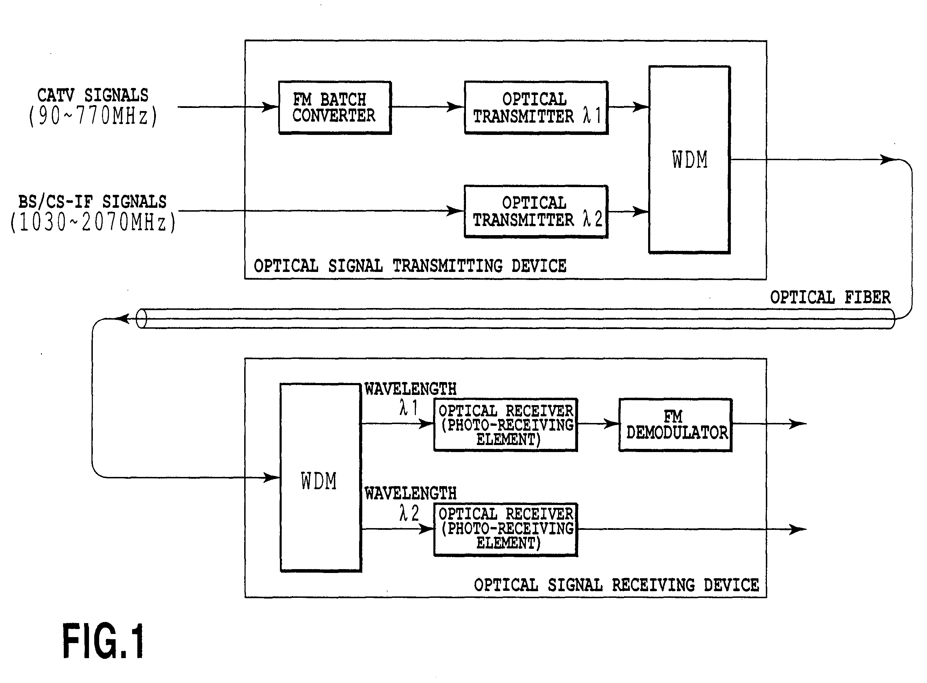

As another method, different optical wavelengths may be assigned to the FM batch converted signal (0 to 6 GHz) and the IF frequency band (1030 to 2070 MHz) of the BS/CS signals, that is, a method assigning two waves. However, in this method, since two photo-receiving elements such as photo diodes (PDs) or avalanche diodes (APDs), are required for each receiver, this results in an increased number of circuit components as well as in an increased overall cost. Figure 1 shows an exemplary configuration of this method.

Also, as a method for transmitting two signals, i.e., a first signal (for example, an FM batch converted signal) and a second signal, with one wavelength, a method has been proposed in which these two signals are multiplexed with frequency division for transmission (Patent Document 3). With this method in Patent Document 3, if the FM batch converted signal (0 to 6 GHz) as the first signal and the BS/CS IF signal (1030 to 2070 MHz) as the second signal are to be multiplexed with frequency division in order to avoid an overlap in frequency, then the center frequency of the FM batch converted signal must be set to 5.07 GHz or hihger. If the center frequency is set to, for example, 5.07 GHz, the frequency of the FM batch converted signal is 2.07 to 8.07 GHz. In this case, for the operating frequency of an FM demodulator for demodulating the FM batch converted signal, a high speed operation of 8 GHz or higher is required, leading to a problem that a conventional FM demodulator with a frequency of about 6 GHz cannot be used.

Patent Document 1: Japanese Patent No. 2700622
Patent Document 2: Japanese Patent No. 3371355
Patent Document 3: Japanese Patent No. 3339031
Non-Patent Document 1: ITU-T Recommendations J.186 (02/2002), Transmission equipment for multi-channel television signals over optical access networks by sub-carrier multiplexing (SCM)
Non-Patent Document 2: ITU-T Recommendations J.185 (02/2002), Transmission equipment for transferring multi-channel television signals over optical access networks by FM conversion
Non-Patent Document 3: Shibata et al. , "Optical Video Distribution System Using Batch FM Conversion Scheme" Transactions of The Institute of Electronics, Information and Communication Engineers. B., Vol.J.83-B, No. 7, pp.948-959, July 2000.

### Disclosure of the Invention

The present invention is directed to an apparatus, a system and a method for transmitting an FMbatch converted signal and other signal on a same optical fiber line.

According to an aspect of the present invention, an optical signal transmitting apparatus for transmitting an FM batch converted signal with a frequency-multiplexed first signal being frequency-modulated in batch and a second signal as an optical signal, the apparatus is configured to transmit the optical signal including the FM batch converted signal and the second signal, wherein the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

According to another aspect of the present invention, an optical signal receiving apparatus for receiving an optical signal including an FM batch converted signal with a frequency-multiplexed first signal being frequency-modulated in batch and a second signal, the apparatus is configured to receive the optical signal to demodulate the FM batch converted signal and the second signal, wherein the center frequency of the FM batch converted signal is set to be less or equal to a value obtained by subtracting the half of the occupied frequency bandwidth of the FM batch converted signal and the half of the occupied frequency bandwidth of the second signal from the center frequency of the second signal.

According to still another aspect of the present invention, an optical signal transmission system comprises the above-described optical signal transmitting apparatus and the above-described optical signal receiving apparatus.

According to still another aspect of the present invention, an optical signal relaying apparatus for transferring an optical signal including an FM batch converted signal with a frequency-multiplexed first signal being frequency-modulated in batch and a second signal, the apparatus is configured to receive the optical signal including one of the FM batch converted signal and the second signal and to add it with the other signal for transmission, wherein the center frequency of the FM batch converted signal is set to be less or equal to a value obtained by subtracting the half of the occupied frequency bandwidth of the FM batch converted signal and the half of the occupied frequency bandwidth of the second signal from the center frequency of the second signal.

According to still another aspect of the present invention, an optical signal transmission system comprises the above-described optical signal relaying apparatus and the above-described optical signal receiving apparatus.

According to still another aspect of the present invention, an optical signal transmitting method for transmitting an FM batch converted signal with a frequency-multiplexed first signal being converted and frequency-modulated in batch and a second signal as an optical signal, the method includes transmitting the optical signal including the FM batch converted signal and the second signal, wherein the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

According to still another aspect of the present invention, an optical signal receiving method for receiving an optical signal including an FM batch converted signal with a frequency-multiplexed first signal being frequency-modulated in batch and a second signal, the method includes receiving the optical signal to demodulate the FM batch converted signal and the second signal, wherein the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

According to still another aspect of the present invention, an optical signal transmissionmethod includes the above-described optical signal transmitting method and the above-described optical signal receiving method.

According to still another aspect of the present invention, an optical signal relaying method for transferring an optical signal including an FM batch converted signal with a frequency-multiplexed first signal being frequency-modulated in batch and a second signal, the method includes receiving the optical signal including one of the FM batch converted signal and the second signal and adding it with the other signal to transmit, wherein the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

According to still another aspect of the present invention, an optical signal transmission method includes the above-described optical signal relaying method and the above-described optical signal receiving method.

As described above, the present invention makes it possible to frequency-multiplex two signals, at least one of which being FM batch converted, and to transmit the signals as an optical signal over a single optical fiber line simultaneously.

On the receiving end, the present invention makes it possible to convert the transmitted optical signal to an electrical signal by a single photo-receiving element and to frequency-separate the two signals.

Furthermore, with an appropriate frequency allocation of the FM batch converted signal and the other signal, frequency-separation of the two transmitted signals can be facilitated, enabling to reduce and avoid spurious interference. As a result, an optical signal transmission system can be realized with an inexpensive configuration.

In an application where video signals such as cable television (CATV) signals are FM converted in batch, which is then transmitted with an RF signal of a BS or CS satellite broadcasting over a single optical fiber line simultaneously, an FM demodulator can be used for demodulating the FM batch converted signal with conventional operating frequency.

As for the transmittedRF signal of the BS/CS satellite broadcasting, the BS/CS down-converter circuit built-in a commercially available BS/CS antenna can be used without modification. Furthermore, since the signal is converted to an IF signal by the down-converter circuit, compatibility with a commercially available BS/CS tuner can be maintained. Thereby, video receiving equipment on the subscriber side can be configured inexpensively.

Furthermore, it can be configured to add the other signal at a relay station after transmitting one of the signals on an optical line, allowing for a regional CATV company to insert its own local program, for example.

### Brief Description of the Drawings

Figure 1 is a diagram showing an exemplary configuration of an optical signal transmission system according to a conventional art;
Figure 2 is a diagram showing an example of an optical signal transmission system according to the present invention;
Figure 3A is a diagram showing an example of the frequency spectra at points A and B in the optical signal transmission system according to the present invention;
Figure 3B is a diagram showing an example of the frequency spectra at point D in the optical signal transmission system according to the present invention;
Figure 3C is a diagram showing an example of the frequency spectra at point E in the optical signal transmission system according to the present invention;
Figure 4 is a diagram showing the frequency spectra at outputs of optical signal receivers in the optical signal transmission system according to the conventional art;
Figure 5 is a diagram showing an example of an optical signal transmitting device according to the present invention;
Figure 6 is a diagram showing an example of the optical signal transmitting device according to the present invention;
Figure 7 is a diagram showing the frequency spectra at output of an optical signal transmitting device according to the present invention;
Figure 8 is a diagram showing an example of an optical signal transmitting device according to the present invention;
Figure 9 is a diagram showing an example of an optical signal receiving device according to the present invention;
Figure 10 is a diagram showing an example of an optical signal receiving device according to the present invention;
Figure 11A is a diagram showing an example of an frequency spectra at point E in the optical signal receiving device according to the present invention;
Figure 11B is a diagram showing an example of the frequency spectra at points F and H in the optical signal receiving device according to the present invention;
Figure 12 is a diagram showing an example of an optical signal relay system according to the present invention;
Figure 13 is a diagram showing an example of an optical signal relay system according to the present invention; and
Figure 14 is a diagram showing an example of an optical signal relay system according to the present invention.

### Best Mode for Carrying Out the Invention

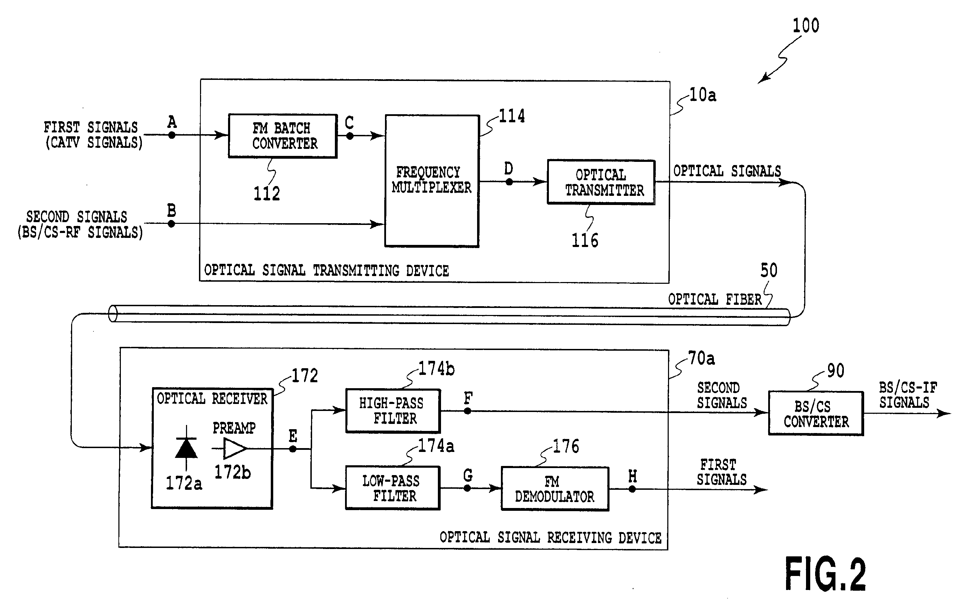

Figure 2 shows an configuration of an optical signal transmission system 100 according to an embodiment of the present invention. As shown in the figure, this system comprises an optical signal transmitting device 10a for converting first and second signals at inputs to an optical signal and transmitting it to an optical fiber line 50, and an optical signal receiving device 70a for converting the optical signal transmitted via the optical fiber line 50 to electrical signals of first and second signals for output. In the present invention, at least one of the first and second signals is FM converted in batch and multiplexed with the other signal. In the optical signal receiving device 70a, the FM batch converted signal is separated from the other signal and then FM-demodulated.

Various embodiments will be specifically described below assuming video signals with a frequency band of 90 to 770 MHz such as cable television (CATV) broadcasting as the first signal, and video signals with an RF frequency of 11.7 to 128 GHz and an intermediate (IF) frequency of 1030 to 2070 MHz of BS or CS (BS/CS) satellite broadcasting as the second signal.

However, the present invention can be applied to general applications that multiplex an FM batch converted signal with a second signal different from that FM batch converted signal for transmission over an optical fiber, and is not limited to the application described below.

### (Embodiment 1)

As shown in Figure 2, the optical signal transmitting device 10a comprises an FM batch converter 112 for FM converting a first signal in batch, a frequency multiplexer 114 for multiplexing the FM batch converted signal and a second signal in frequency, and an optical transmitter 116 for modulating an optical signal in intensity with the frequency-multiplexed electrical signal.

In the figure, the first signal such as CATV broadcasting signal (90 to 770 MHz) is provided (at point A) and the second signal such as BS/CS satellite broadcasting RF signal (11.7 to 12.8 GHz) is provided (at point B). In general, the CATV signal is a signal with multi-channel video signals being multiplexed via frequency-division whereas the RF signal of the BS/CS satellite broadcasting is also a signal with multi-channel video signals being multiplexed via frequency-division. The BS/CS satellite broadcasting RF signal may be a signal which is up-converted from an IF frequency band (1030 to 2070 MHz) to an RF signal (11.7 to 12.8 GHz) of the BS/CS satellite broadcasting by a block up converter, or may directly be the RF signal (11.7 to 12.8 GHz) of the BS/CS satellite broadcasting received by a satellite antenna.

In the optical signal transmitting device 10a, the CATV signal (90 to 770 MHz) of the first signal is frequency modulated (FM-modulated) in batch by the FM batch converter 112 to obtain a broadband frequency-modulated signal of 0 to 6 GHz, so-called FM batch converted signal (at point C). This FM batch converted signal and the BS/CS satellite broadcasting RF signal (11.7 to 12.8 GHz) of the second signal are multiplexed in frequency by the frequency multiplexer 114 composed of electrical filters or the like (at point D). Then, a laser is modulated in intensity by the optical transmitter 116 to transmit the optical signal to the optical fiber line 50.

Meanwhile, in the optical signal receiving device 70a, the optical signal is received by an optical receiver 172, converted to electrical signals by a photo-receiving element 172a such as a PD and an APD, and amplified by a preamplifier 172b for output of the electrical signals (at point E) . The output electrical signals are separated in frequency by a high pass filter 174b and a low pass filter 174a. A high-frequency signal separated in frequency by the high pass filter (at point F) is output to a BS/CS converter 90, where the signal is down-converted to an IF frequency (1030 to 2070 MHz). An FM batch converted signal separated in frequency by the low pass filter (at point G) is demodulated to the CATV signal (90 to 770 MHz) by an FM demodulator 176 (at point H).

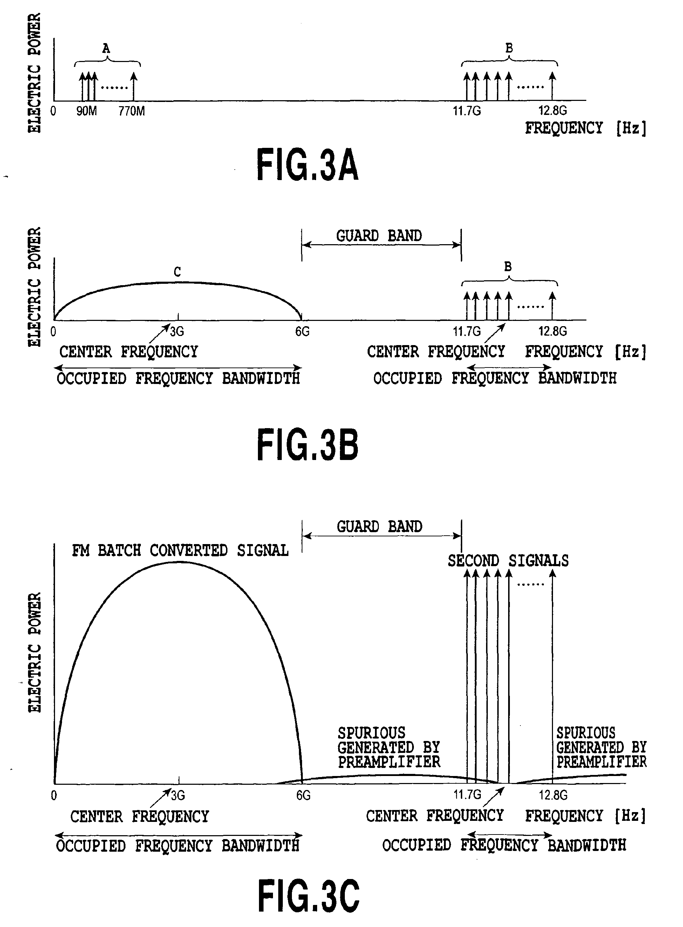

Figures 3A to 3C show the frequency allocation in this case. Figure 3A shows the electrical spectra at points A and B in Figure 2. The signal at point A is a CATV signal (90 to 770 MHz) of the first signal with multi-channel video signals being multiplexed via frequency-division, and the signal at point B is an RF signal (11.7 to 12.8 GHz) of BS/CS satellite broadcasting of the second signal with multi-channel video signals being multiplexed via frequency-division. The frequency allocation in the present invention will be described below.

The occupied band width of an FM batch converted signal after FM batch converting the CATV video signals (90 to 770 MHz) of the first signal with frequency-division multiplexing, is assumed to be 6 GHz. In this case, the center frequency of the FM batch converted signal is set to be less than or equal to a value obtained by subtracting the half of the occupied frequency bandwidth 6 GHz of the FM batch converted signal, i.e. 3 GHz, and the half of the occupied frequency bandwidth of the BS/CS satellite broadcasting RF signal of the second signal, i.e. 0.55 GHz, from the center frequency of the BS/CS satellite broadcasting RF signal (11.7 to 12.8 GHz) of the second signal, i.e. 12.25 GHz. That is, the center frequency of the FM batch converted signal is set to be less than or equal to 8.7 GHz. By setting like this, the FM batch converted signal of the first signal is allocated in frequency with the second signal, without overlapping on the frequency spectrum.

Figure 3B shows electrical spectra at point D in Figure 2 when the center frequency of the FM batch converted signal is set to 3 GHz. In this case, it is seen that the guard band width can be made wide as 5.7 GHz.

Figure 3C shows spectra of the electrical signal at point E, which is the output from the preamplifier 172b in the optical receiver 172 in Figure 2. In this preamplifier, due to distortions, spurious occurs at frequencies corresponding to the sum of and the difference between the frequencies of the FM batch converted signal and the second signal. Figure 3C shows a spurious signal spectrum obtained by subtracting the frequency of the FM batch converted signal from the frequency of the second signal and a spurious signal spectrum obtained by adding the frequency of the FM batch converted signal to the frequency of the second signal.

As shown in Figure 3C, according to the present invention, the spurious signals generated by the preamplifier becomes broad, so that the noise intensity is spread, thereby the interference to the FM batch converted signal caused by the spurious signals as well as the interference to the second signal caused by the spurious signals can be significantly reduced. Furthermore, in the case of this embodiment, since the guard band is taken wide, the most of the spurious signals generated by the preamplifier falls in the guard band, with almost no overlap between the spurious signals and the FM batch converted signal on the spectrum. As such, the interference to the FM batch converted signal caused by the spurious signals as well as the interference to the second signal caused by the spurious signals will be reduced further.

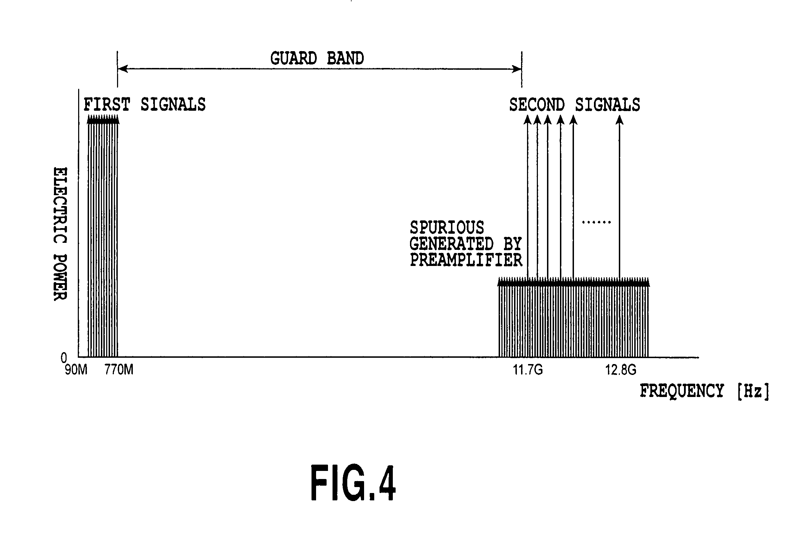

For comparison, Figure 4 shows spectra where a CATV signal of 90 MHz to 770 MHz is directly multiplexed in frequency with the second signal and transmitted without using an FM batch converted signal. As shown in the figure, the frequencies corresponding to the sum of and the difference between the frequencies of the CATV signal and the second signal appears as distortions at the output of the preamplifier.

In this case, a spurious signal with subtracting the frequency of the CATV signal from the frequency of the second signal and a spurious signal with adding the frequency of the CATV signal to the frequency of the second signal are generated as narrowband spectra. The spurious signals become strong interference to the second signal as most of the spurious signals fall in the frequency band of the second signal. Also, as shown in Figure 4, it can be seen that most of the spurious signals fall in the frequency band of the second signal, whether the guard band is wide or narrow, even if the guard band is taken wide such as 11.7-0.77=10.93 GHz.

According to this embodiment, the FM demodulator 176 demodulating an FM batch converted signal can be used which has an operating frequency of about 6 GHz as heretofore.

### (Embodiment 2)

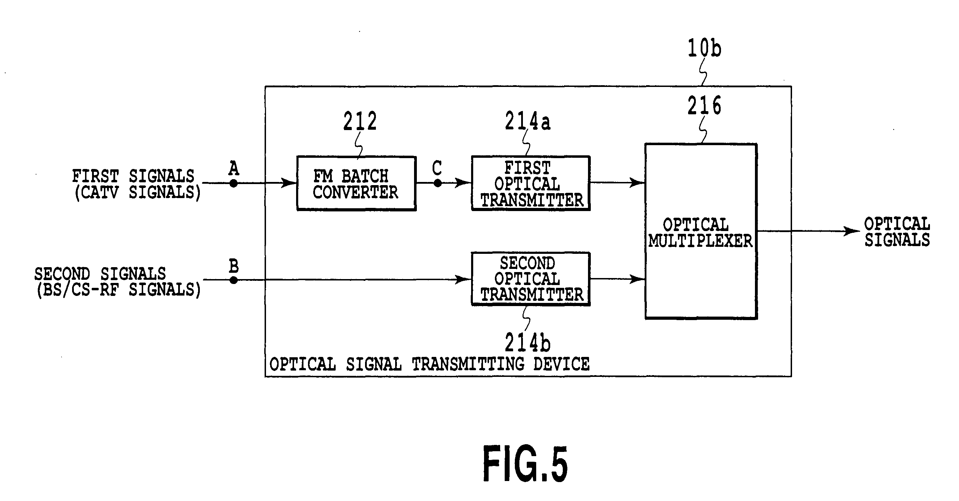

Figure 5 shows a configuration of an optical signal transmitting device 10b according to an embodiment of the present invention. The optical signal transmitting device in Figure 5 comprises a batch FM converter 212 for FM converting the first signal in batch, a first optical transmitter 214a for modulating an optical signal in intensity with the FM batch converted signal, a second optical transmitter 214b for modulating an optical signal in intensity with a second signal, and an optical multiplexer 216 for multiplexing the intensity-modulated first and second optical signals.

In this embodiment 2, the wavelength of the first optical transmitter and the wavelength of the second optical transmitter are required to be separated to an extent that no interference noise does occur. For example, if the optical wavelength of the first optical transmitter and the optical wavelength of the second optical transmitter are separated by 13 GHz or more, the differential component between the two optical wavelengths does not fall within the transmission frequency band of 0 to 12.8 GHz and does not cause an interference noise. However, when a semiconductor laser is used as a light source, the line width of the laser beam is some tens of MHz. Also, a chirp phenomenon occurs due to modulation, and the line width is spread to about 7 GHz at the full-width at half-maximum, of which bottom is known to be spread further. Accordingly, for the difference between the two wavelengths, it is not sufficient to separate the wavelengths by only 13 GHz, and is desirable to separate by about 20 GHz or more.

The optical signal transmitting device 10b according to this embodiment 2 can be combined with the optical signal receiving device 70a shown in Figure 2 to construct an optical signal transmission system. In this case, the spectra at point E, which are the preamplifier output of the optical receiver 172 in the optical signal receiving device 70a, are similar to that in Figure 3C, and the descriptions made in relation to Figure 3C are similarly applied thereto.

### (Embodiment 3)

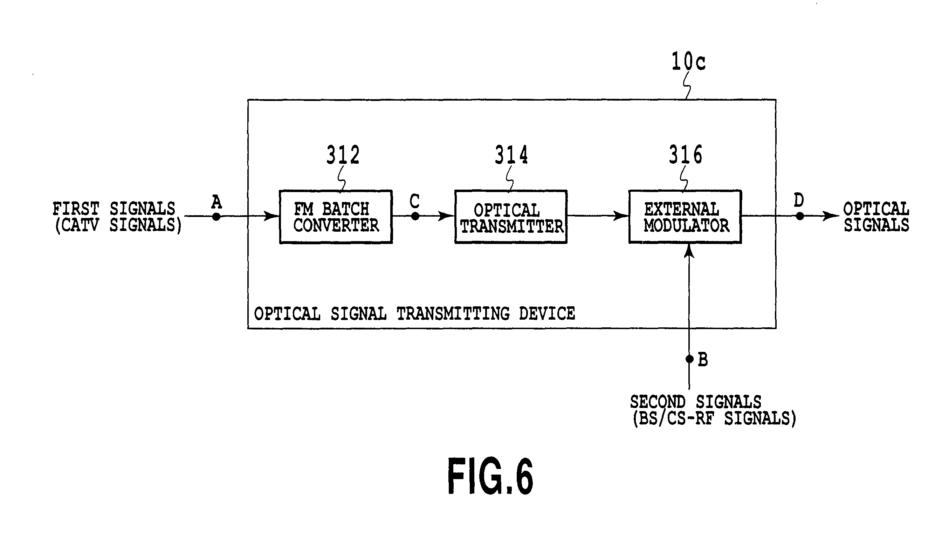

Figure 6 shows a configuration of an optical signal transmitting device 10c according to an embodiment of the present invention. The optical signal transmitting device 10c in Figure 6 comprises a batch FM converter 312 for FM converting a first signal in batch, an optical transmitter 314 for modulating an optical signal in intensity with the FM batch converted signal, and an external modulator 316 for modulating the FM batch converted and intensity-modulated optical signal with a second signal. For the external modulator such as a Mach-Zehnder type based on LiNbO₃, or an electro-absorption modulator can be used.

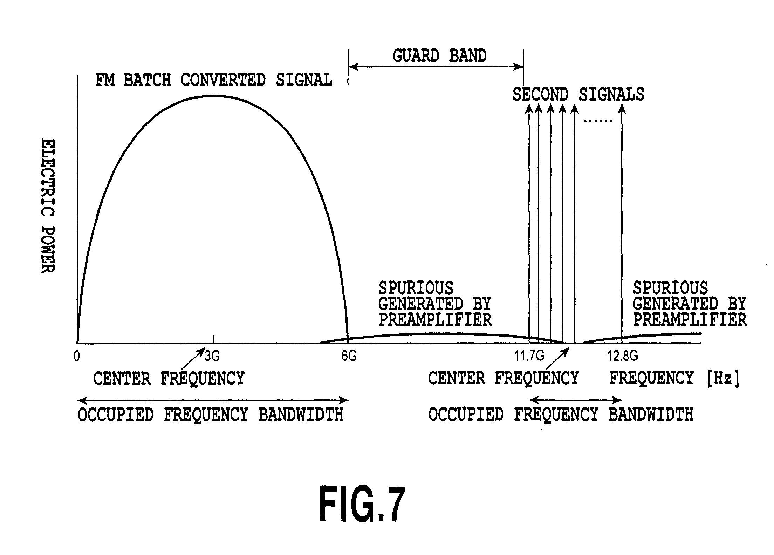

Figure 7 shows frequency spectra when the optical signal at point D in Figure 6 is photoelectrically converted to electrical spectra. From the figure, it can be seen that an FM batch converted spectra and the second signal spectra are frequency-multiplexed in effect.

When modulating by an external modulator, which generally means performing multiplication, frequency components corresponding to the sum of and the difference between the FM batch converted signal of the CATV signal and the BS/CS satellite broadcasting RF signal of the second signal appear as spurious. However, following the above-described method of setting the center frequency of the FM batch converted signal according to the present invention, the influence of this spurious interference can be minimized.

Figure 7 shows spurious signals generated by an external modulator. The spurious signals have a frequency bandwidth with adding the occupied frequency bandwidth of the BS/CS satellite broadcasting RF signal to the occupied frequency bandwidth of the FM batch converted signal of the CATV signal, which is a broadband, and as shown in Figure 7, the noise intensity is spread. Furthermore, since FM batch conversion is a transmission method immune to noise, the generated spurious have little influence as interference.

Furthermore, as shown in Figure 7, by taking a wide guard band between the FM batch converted signal of the CATV signal and the second signal of the BS/CS satellite broadcasting RF signal, the influence due to the spurious can be reduced further. Also, by taking a wide guard band, it becomes easier to separate the FM batch converted signal and the second signal in frequency with an electrical filter in the optical signal receiver 70.

In this example, since the guard band is taken for a frequency bandwidth of 5.7 GHz, frequency separation can be easily realized with an inexpensive filter configuration. This is important for transmission of an FM batch converted signal, because this frequency separation filter can cause significant group delay (for example, about 80 psec or more) within the FM batch converted signal band (0 to 6 GHz) and lead to distortions. Therefore, the frequencies of the FM batch converted signal and the second signal have to be separated while satisfying the constraints to the group delay.

If the guard band is narrow, a steep filter characteristic is required to separate the frequencies within the narrow guard band, and as a result, the group delay within the pass band may change. By way of example, Patent Document 3 shows that distortions can occur by group delay of 80 psec or more.

### (Embodiment 4)

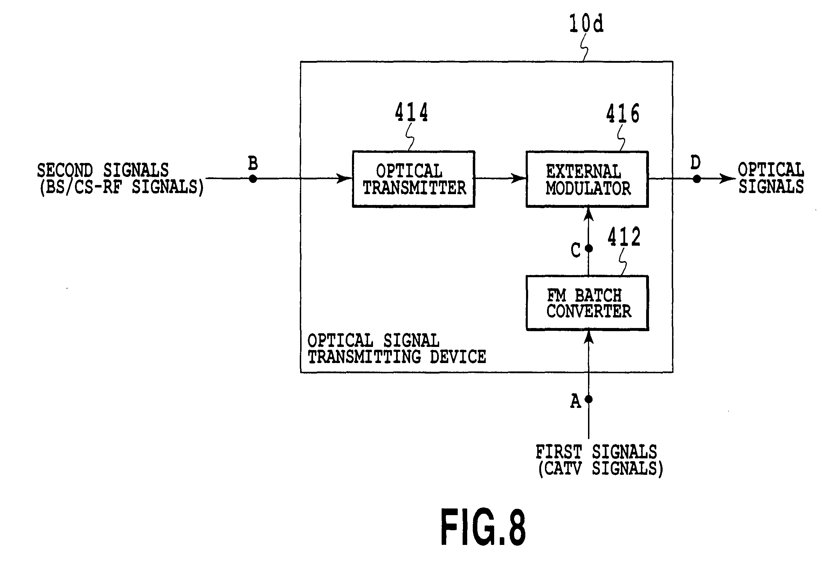

Figure 8 shows a configuration of an optical signal transmitting device 10d according to an embodiment of the present invention. The optical signal transmitting device 10d in Figure 8 comprises a batch FM converter 412 for FM converting a first signal in batch, an optical transmitter 414 for modulating an optical signal in intensity with a second signal, and an external modulator 416 for modulating the intensity-modulated optical signal in intensity with the FM batch converted signal.

When modulating by an external modulator, which generally means performing multiplication, and frequency components corresponding to the sum of and the difference between the FM batch converted signal of the CATV signal and the BS/CS satellite broadcasting RF signal become spurious causing interference. However, again in this embodiment, following the above-described method of setting the center frequency of the FM batch converted signal according to the present invention, the influence of this spurious interference can be minimized. The frequency allocation in this case is again similar to the spectra shown in Figure 7, and the descriptions made in relation to Figure 7 can be applied similarly for this embodiment.

### (Embodiment 5)

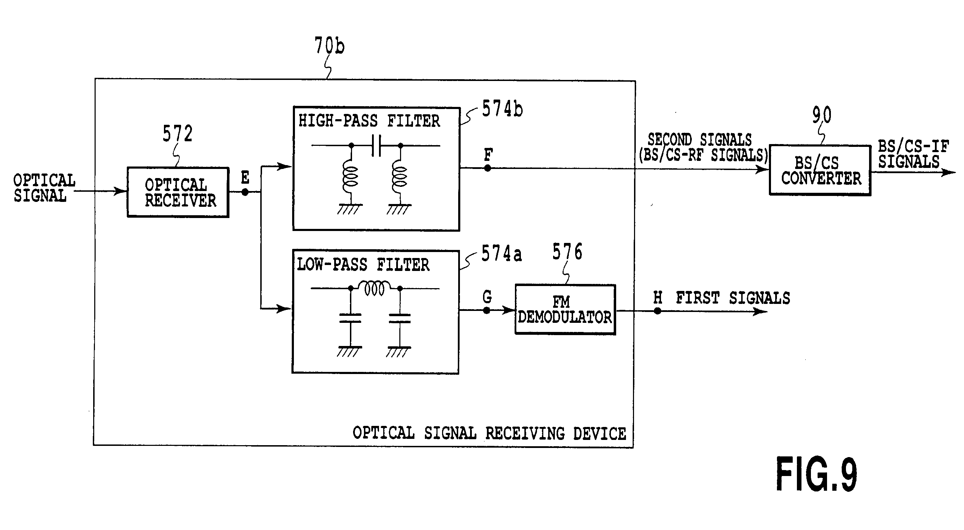

Figure 9 shows a configuration of an optical signal receiving device 70b according to an embodiment of the present invention. The optical signal receiving device 70b in Figure 9 comprises an optical receiver 572 for photoelectrically converting an optical signal transmitted from an optical signal transmitting device 10 via the optical fiber line 50 by a single photo-receiving element (such as a PD and an APD), a high pass filter 574b for selectively filtering a second signal out of the photoelectrically converted electrical signal, a low pass filter 574a for selectively filtering an FM batch converted signal out of the photoelectrically converted electrical signal, and an FM demodulator 576 for demodulating the filtered FM batch converted signal to restore a first signal.

The CATV signal (90 to 770 MHz) of the first signal is restored by the FM demodulator, and the second signal of the BS/CS satellite broadcasting RF signal (11.7 to 12.8 GHz) is down-converted to an IF signal (1030 to 2070 MHz) by a BS/CS converter. This IF signal can be used as input to a commercially available BS/CS tuner. A circuit used for a BS/CS antenna can be also utilized as the BS/CS converter.

The output frequency of the high pass filter 574b is RF signal (11.7 to 12.8 GHz) of the BS/CS satellite, which is extremely high frequency, so that wire connections should preferably be made short.
Accordingly, the BS/CS converter may be configured to be incorporated in the optical signal receiving device 70b. Also, it may be configured to remove the FM batch converted signal by limiting the BS/CS converter to a low frequency band.

When configuring an LC filter circuit as the low pass filter 574a, group delay may exceeds a tolerable limit, then the FM demodulator 576 may be designed to provide frequency selectivity such that it respond to the FM batch converted signal while not responding to the BS/CS satellite broadcasting RF signal (11.7 to 12.8 GHz). For example, a method is conceivable, which limits the band of the preamplifier in the FM demodulator 576; limits the high frequency characteristic of an AND gate in the FM demodulator using delay detection; further limits the band of limiting amplifiers in the FM demodulator; or removes unnecessary amplitude components by the limiter amplifiers.

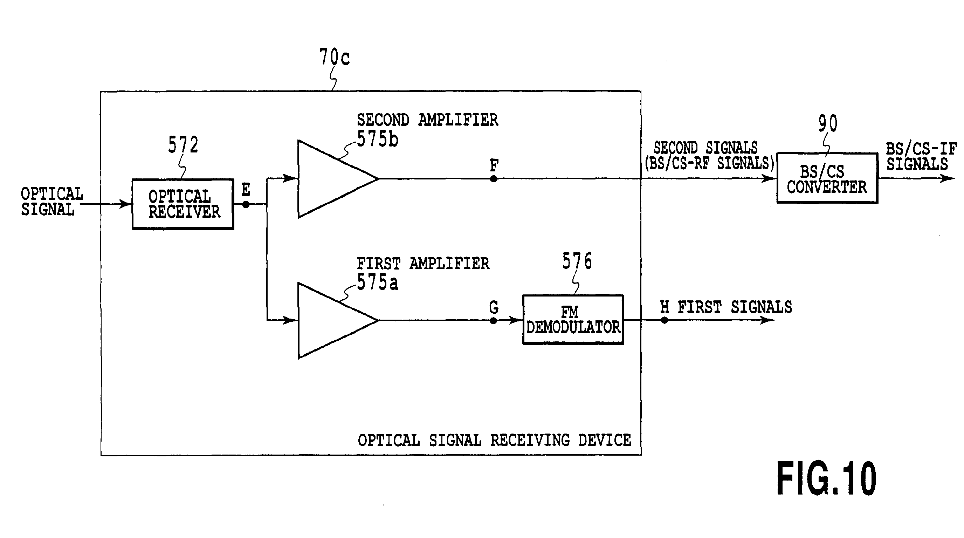

As for a configuration for the frequency separation using the high pass filter 574b and the low pass filter 574a, a method of configuring with passive capacitors and inductors as shown in Figure 9 and a method of using active components as shown in Figure 10 are conceivable. In an optical signal receiving device 70c in Figure 10, usedas a functionof high-pass filter is a secondamplifier 575b which selectively amplifies the band for RF signal of the BS/CS satellite broadcasting while not amplifying the FM batch converted signal with low frequencies, and used as a function of low-pass filter is a first amplifier 575a which selectively amplifies the FM batch converted signal (0 to 6 GHz) while not amplifying signals with higher frequencies. By configuring in this way, an effect substantially similar to a frequency filter can be achieved.

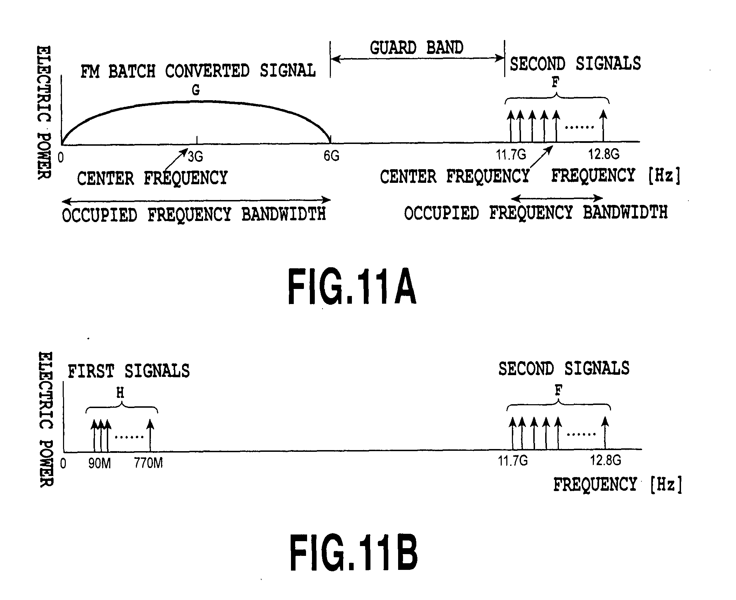

Figures 11A and 11B are diagrams for illustrating the frequency allocation of the optical signal receiving device 70 according to the present invention. Figure 11A shows the frequency spectra at point E in Figures 2, 9 and 10, and Figure 11B shows the frequency spectra at points F and H in Figures 2, 9 and 10. From Figures 11A and 11B, it can be seen how the first and second signals are demodulated. (Embodiment 6)

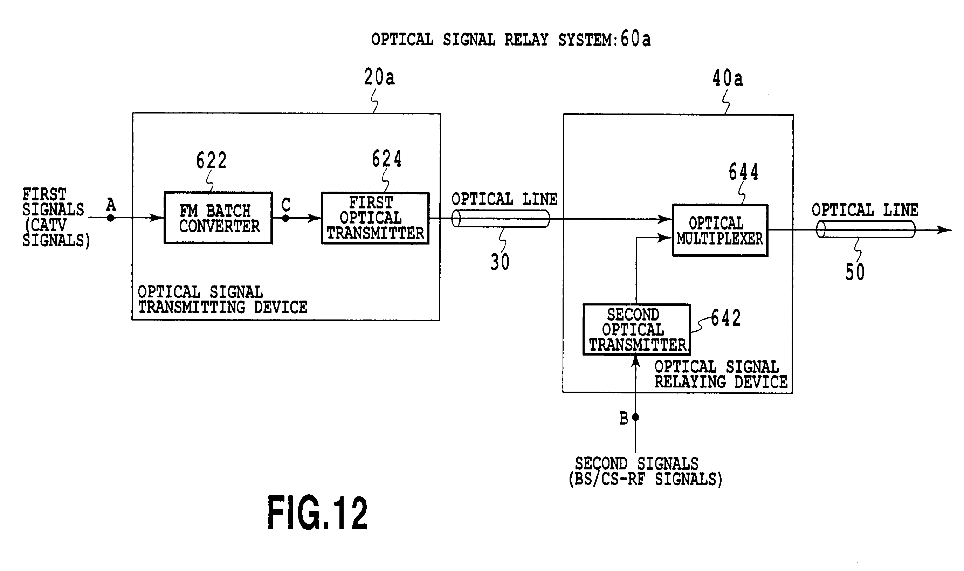

Figure 12 shows a configuration of an optical signal relay system 60a according to an embodiment of the present invention. The optical signal relay system 60a in Figure 12 comprises an optical signal transmitting device 20a for converting a first signal to an optical signal and transmitting it to an optical fiber line 30, and an optical signal relaying device 40a for multiplexing the optical signal transmitted over the optical fiber line 30 with an optical signal of a second signal and transmitting it to the optical fiber line 50.

The optical signal transmitting device 20a in Figure 12 comprises a batch FM converter 622 for FM converting the first signal such as CATV video signals (90 to 770 MHz) in batch, and a first optical transmitter 624 for modulating an optical signal in intensity with the FM batch converted signal. The optical signal relaying device 40a in Figure 12 comprises a second optical transmitter 642 for modulating an optical signal in intensity with the second signal such as BS/CS satellite broadcasting RF signal (11.7 to 12.8 GHz), and an optical multiplexer 644 for multiplexing an optical signal transmitted from a first optical transmitter 624 via the optical fiber line 30 with an optical signal from a second optical transmitter 642.

With such optical signal relay system, the optical signal output from the first optical transmitter 624 can be optically split by an optical splitter to more than two, each being distributed to a different station, and at each station an optical signal including the second signal may be multiplexed by an optical multiplexer 644. This allows for inserting a different program by the second signal at each station, while providing a common program by the first signal. That is, insertion of regional program can be realized. In Figure 12, while the first signal is transmitted from a remote site by the first transmitter. The second signal may be transmitted from a different remote site by the second optical transmitter 642, and these signals may be multiplexed at a relay station to be distributed to another remote site, such as a regional station or a subscriber premises.

Note that the wavelength of the first optical transmitter and the wavelength of the second optical transmitter have to be separated enough so that no interference noise can occur. Forexample, if the optical wavelength of the first optical transmitter with CATV signal and the optical wavelength of the second optical transmitter with BS/CS signal are separated by 13 GHz or more, the difference between the two optical wavelengths does not fall in the transmission frequency band of 0 to 12.8 GHz and does not cause as interference noise. However, if a semiconductor laser is used as a light source, the line width of the laser is some tens of MHz. Also, a chirp phenomenon occurs due tomodulation, and the line width is spread to about 7 GHz at the full-width at half-maximum, of which bottom is known to be spread further. Accordingly, for the difference between the two wavelengths, it is not sufficient to separate the wavelengths by only 13 GHz, and is desirable to separate by about 20 GHz or more.

### (Embodiment 7)

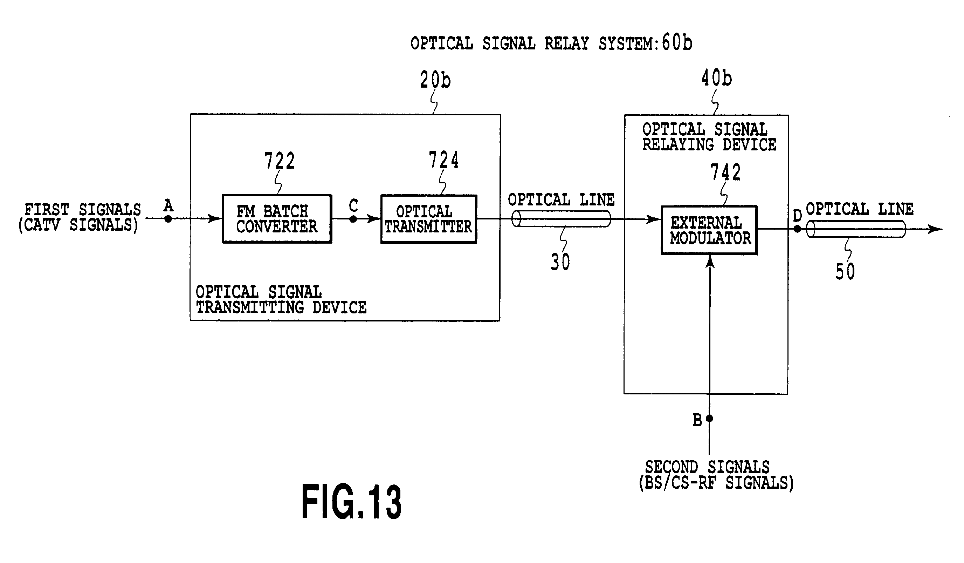

Figure 13 shows a configuration of an optical signal relay system 60b according to an embodiment of the present invention. The optical signal relay system 60b in Figure 12 comprises an optical signal transmitting device 20b for converting a first signal to an optical signal and transmitting it to the optical fiber line 30, and an optical signal relaying device 40b for modulating the optical signal transmitted via the optical fiber line 30, with a second signal and transmitting it to the optical fiber line 50.

The optical signal transmitting device 20b in Figure 13 comprises an optical transmitter 722 for FM converting the first signal such as CATV video signals (90 to 770 MHz) in batch, and an optical transmitter 724 for modulating an optical signal in intensity with the FM batch converted signal. The optical signal relaying device 40b in Figure 13 comprises an external modulator 742 for modulating the optical signal transmitted from the optical transmitter 724 via the optical fiber line 30, with the second signal such as BS/CS satellite broadcasting RF signal (11.7 to 12.8 GHz). For the external modulator, such as Mach-Zehnder type based on LiNbO₃, or an electro-absorption modulator can be used.

The spectra when the optical signal at point D in Figure 13 is photoelectrically converted to electrical spectra are similar to that shown in Figure 7. Accordingly, the descriptions made in relation to Figure 7 can be applied for this embodiment.

### (Embodiment 8)

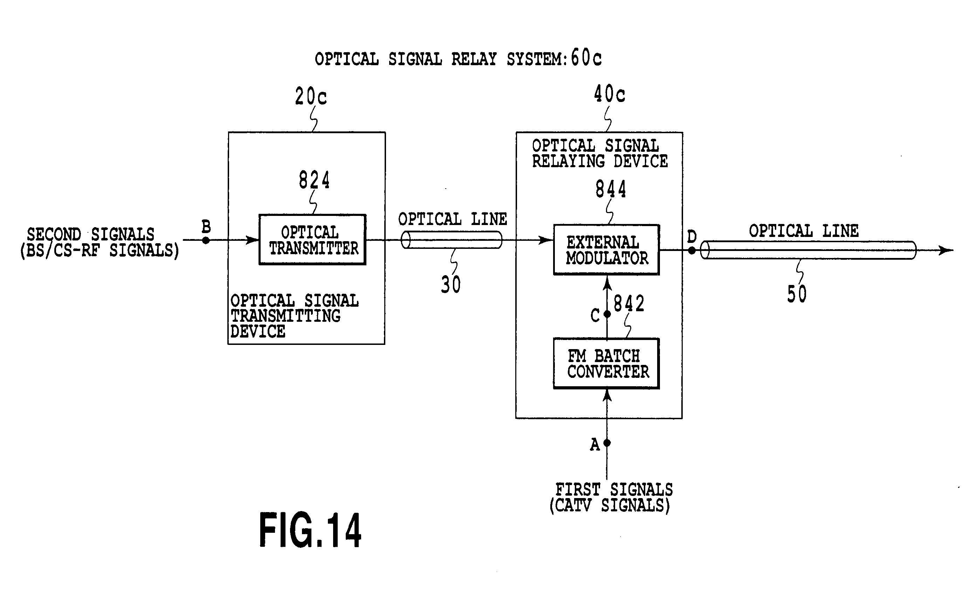

Figure 14 shows a configuration of an optical signal relay system 60c according to an embodiment of the present invention. The optical signal relay system 60c in Figure 14 comprises an optical signal transmitting device 20c for converting a second signal to an optical signal and transmitting it to the optical fiber line 30, and an optical signal relaying device 40c for modulating the optical signal transmitted via the optical fiber line 30, with a first signal and transmitting it to the optical fiber line 50.

The optical signal transmitting device 20c in Figure 14 comprises an optical transmitter 824 for modulating an optical signal in intensity with the second signal such as BS/CS satellite broadcasting RF signal (11.7 to 12.8 GHz). The optical relaying device 40c in Figure 14 comprises a batch FM converter 842 for FM converting the first signal such as CATV video signals (90 to 770 MHz), and an external modulator 844 for modulating an optical signal transmitted from the optical transmitter 824 via the optical fiber line 30, with the FM batch converted signal converted by the batch FM converter 842. For the external modulator, such as a Mach-Zehnder type based on LiNbO₃, or an electro-absorption modulator can be used.

The spectra when the optical signal at point D in Figure 14 is photoelectrically converted to electrical spectra are similar to that shown in Figure 7. Accordingly, the descriptions made in relation to Figure 7 can also be applied for this embodiment.

### (Embodiment 9)

In the above-described embodiments, the original frequency of the BS/CS satellite broadcast signal is the radio frequency (RF) 11.7 to 12.8 GHz in an aerial wave emitted from a satellite. The intermediate frequency (IF) received by the BS/CS antenna and down-converted by the BS/CS converter is a signal with the intermediate frequency (1030 to 2070 MHz) corresponding to a signal broadcasted as satellite broadcast wave with BS right-handed circularly polarized wave and CS right-handed circularly polarized wave. The present invention has been described for these.

However, the present invention is not only applied to the signal broadcasted by the BS right-handed circularly polarized wave and the CS right-handed circularly polarized wave, but also extended to a signal broadcasted by CS left-handed circularly polarized wave. In this case, the IF frequency band is extended to 1030 to 2600 MHz . In fact, the frequency of a radio wave emitted from a satellite has the same frequency band for both the CS right-handed circularly polarized wave and the CS left-handed circularly polarized wave, that is 12.3 to 12.8 GHz. In the present invention, however, no distinction between the right-handed circularly polarized wave and the left-handed circularly polarized wave is made, and the RF frequency of video signals by the CS left-handed circularly polarized wave is allocated at a higher frequency band than the CS right-handed circularly polarized wave. That is, if video signals by the CS left-handed circularly polarized wave are allocated at 12.8 to 13.3 GHz, then the BS and CS right-handed circularly polarized waves and the CS left-handed circularly polarized wave are multiplexed to a frequency of 11.7 to 13.3 GHz.

By frequency multiplexing in this way, the same local oscillator can be used with a down-converter extended in frequency so that not only BS and CS right-handed circularly polarized waves but also video signals by CS left-handed circularly polarized wave can be converted in batch to the extended IF frequency band of 1030 to 2600 MHz.

### (Other embodiments)

The respective components described in the above embodiments can be combined in various ways for any purpose. For example, every optical signal transmitting device 10 described in the embodiments 1 to 4 can be arbitrarily combined with the optical signal receiving device 70 described in the embodiment 5 to construct the optical signal transmission system 100. Similarly, every optical signal relay system 60 described in the embodiments 6 to 8 can be arbitrarily combined with the optical signal receiving device 70 described in the embodiment 5 to construct the optical signal transmission system 100.

In the above embodiments, descriptions have been made assuming the first signal as CATV signal and the second signal as BS/CS satellite broadcasting signal. However, the first signal and the second signal can be exchanged asneeded. Forexample, in the optical signal relay system 60 described in the embodiments 6 to 8, the first signal of a common signal as a BS/CS satellite broadcast signal, and the second signal of a signal at each station as a CATV signal may be assumed. That is, assuming BS/CS satellite broadcast as a common signal, CATV signal as a regional program can be inserted.

In the above embodiments, descriptions have been made with a frequency-division multiplexed CATV video signal (90 to 770 MHz) as an example of the first signal. However, the first signal may be any frequency-division multiplexed signal, other than the frequency-division multiplexed CATV signal. Such as a monitor video signal, an audio signal without video, a simple monitor/alarm signal without any audio and video, and the like may be used.

In the above embodiments, descriptions have been made with a frequency-division multiplexed BS/CS satellite broadcast RF signal (11.7 to 12.8 GHz) as an example of the second signal. However, the second signal may be any frequency-division multiplexed signal, other than the frequency-division multiplexed BS/CS satellite broadcasting videos. Such as a monitor video signal, a stereo audio signal without video, a simple monitor signal without any audio and video, and the like may be used.

Furthermore, while descriptions have been made in the above embodiments with a frequency-division multiplexed signal as an example of the second signal, single carrier modulation having a sideband on a single carrier at a certain frequency may be used.

Furthermore, a FM batch converted signal with a frequency-division multiplexedsignalbeing FM converted may be used as the second signal. In this case, each of the first and second signals is an FM converted signal with a frequency-division multiplexed signal being converted.

The present invention has been specifically described based on several embodiments. However, in view of many feasible embodiments to which the principle of the present invention can be applied, the embodiments described herein are for illustration purpose only and are not intended to limit the scope of the present invention. The embodiments illustrated herein can be modified in configuration and details without departing from the spirit of the present invention. Furthermore, the components for illustration may be modified, supplemented, and/or changed in the order.

## Claims

1. An optical signal transmitting apparatus for transmitting a FM batch converted signal with a frequency-multiplexed first signal being frequency-modulated in batch and a second signal as an optical signal, the apparatus is configured to transmit the optical signal including the FM batch converted signal and the second signal wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

2. The optical signal transmitting apparatus as set forth in claim 1, the apparatus comprises:
a frequency multiplexing means for frequency-multiplexing the FM batch converted signal and the second signal; and
an optical transmitter for intensity-modulating an optical signal with the signal frequency-multiplexed by the frequency multiplex means.

3. The optical signal transmitting apparatus as set forth in claim 1, the apparatus comprises:
a first optical transmitter for intensity-modulating an optical signal with the FM batch converted signal;
a second optical transmitter for intensity-modulating an optical signal with the second signal; and
an optical multiplexer for multiplexing the optical signal from the first optical transmitter and the optical signal from the second optical transmitter.

4. The optical signal transmitting apparatus as set forth in claim 3, wherein:
the wavelength of the optical signal from the second optical transmitter and the wavelength of the optical signal from the first optical transmitter are separated to reduce interference noise.

5. The optical signal transmitting apparatus as set forth in claim 1, the apparatus comprises:
an optical transmitter for intensity-modulating the optical signal with the FM batch converted signal; and
an external modulator for further intensity-modulating the optical signal with the second signal, the optical signal being intensity-modulated by the optical transmitter,.

6. The optical signal transmitting apparatus as set forth in claim 1, the apparatus comprises:
an optical transmitter for intensity-modulating the optical signal with the second signal; and
an external modulator for further intensity-modulating the optical signal with the FM batch converted signal, the optical signal being intensity-modulated by the optical transmitter.

7. An optical signal receiving apparatus for receiving an optical signal including a FM batch converted signal with a frequency-multiplexed first signal being frequency-modulated in batch and a second signal, the apparatus is configured to receive the optical signal to demodulate the FM batch converted signal and the second signal, wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

8. The optical signal receiving apparatus as set forth in claim 7, the apparatus comprises:
an optical receiver for converting the received optical signal to an electrical signal;
a first filter for passing the FM batch converted signal included in the converted electrical signal;
a second filter for passing the second signal included in the converted electrical signal; and
an FM demodulator for demodulating the FM batch converted signal passed through the first filter, to the first signal.

9. The optical signal receiving apparatus as set forth in claim 7, the apparatus comprises:
an optical receiver for converting the received optical signal to an electrical signal;
a first amplifier for selectively amplifying the FM batch converted signal included in the converted electrical signal;
a second amplifier for selectively amplifying the second signal included in the converted electrical signal; and
an FM demodulator for demodulating the FM batch converted signal amplified by the first amplifier, to the first signal.

10. The optical signal receiving apparatus as set forth in claim 7, the apparatus comprises:
an optical receiver for converting the received optical signal to an electrical signal;
an FM demodulator for demodulating the FM batch converted signal included in the converted electrical signal to the first signal; and
a down-converter for down-converting the second signal included in the converted electrical signal for output.

11. An optical signal transmission system, comprising:
the optical signal transmitting apparatus as set forth in any one of claims 1 to 6; and
the optical signal receiving apparatus as set forth in any one of claims 7 to 10.

12. An optical signal relaying apparatus for transferring an optical signal including a FM batch converted signal with a frequency-multiplexed first signal being frequency-modulated in batch and a second signal, the apparatus is configured to receive the optical signal including one of the FM batch converted signal and the second signal and to add it with the other signal to transmit, wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

13. The optical signal relaying apparatus as set forth in claim 12, the apparatus comprises:
an optical multiplexer for multiplexing the optical signal including the FM batch converted signal and the optical signal including the second signal.

14. The optical signal relaying apparatus as set forth in claim 13, wherein:
the wavelength of the optical signal including the second signal and the wavelength of the optical signal including the FM batch converted signal are separated to reduce interference noise.

15. The optical signal relaying apparatus as set forth in claim 12, the apparatus comprises:
an external modulator for intensity-modulating the optical signal with the second signal, the optical signal including the FM batch converted signal.

16. The optical signal relaying apparatus as set forth in claim 12, the apparatus comprises:
an external modulator for intensity-modulating the optical signal with FM batch converted signal, the optical signal including the second signal.

17. An optical signal transmission system comprising:
the optical signal relaying apparatus as set forth in any one of claims 12 to 16; and
the optical signal receiving apparatus as set forth in any one of claims 7 to 10.

18. An optical signal transmitting method for transmitting a FM batch converted signal with a frequency-multiplexed first signal being converted and frequency-modulated and a second signal as an optical signal, the method includes transmitting the optical signal including the FM batch converted signal and the second signal wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

19. The optical signal transmitting method as set forth in claim 18, the method includes the steps of:
frequency-multiplexing the FM batch converted signal and the second signal; and
intensity-modulating an optical signal with the frequency-multiplexed signal.

20. The optical signal transmitting method as set forth in claim 18, the method includes the steps of:
intensity-modulating an optical signal with the FM batch converted signal;
intensity-modulating an optical signal with the second signal; and
multiplexing the optical signal intensity-modulated with the FM batch converted signal and the optical signal intensity-modulated with the second signal.

21. The optical signal transmitting method as set forth in claim 20, wherein:
at the multiplexing step, the wavelength of the optical signal intensity-modulatedwith the second signal and the wavelength of the optical signal intensity-modulated with the FM batch converted signal are separated to reduce interference noise.

22. The optical signal transmitting method as set forth in claim 18, the method include the steps of:
intensity-modulating an optical signal with the FM batch converted signal; and
further intensity-modulating the intensity-modulated optical signal with the second signal.

23. The optical signal transmitting method as set forth in claim 18, the method includes the steps of:
intensity-modulating an optical signal with the second signal; and
further intensity-modulating the intensity-modulated optical signal with the FM batch converted signal.

24. An optical signal receiving method for receiving an optical signal including a FM batch converted signal with a frequency-multiplexed first signal being frequency-modulated in batch and a second signal, the method includes receiving the optical signal to demodulate the FM batch converted signal and the second signal, wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

25. The optical signal receiving method as set forth in claim 24, the method includes the steps of:
converting the received optical signal to an electrical signal;
selectively passing the FM batch converted signal included in the converted electrical signal;
selectively passing the second signal included in the converted electrical signal; and
demodulating the FM batch converted signal selectively passed, to the first signal.

26. The optical signal receiving method as set forth in claim 24, the method includes the steps of:
converting the received optical signal to an electrical signal;
selectively amplifying the FM batch converted signal included in the converted electrical signal;
selectively amplifying the second signal included in the converted electrical signal; and
demodulating the FM batch converted signal selectively amplified, to the first signal.

27. The optical signal receiving method as set forth in claim 24, the method comprises the steps of:
converting the received optical signal to an electrical signal;
demodulating the FM batch converted signal included in the converted electrical signal to the first signal; and
down-converting the second signal included in the converted electrical signal.

28. An optical signal transmission method including:
the optical signal transmitting method as set forth in any one of claims 18 to 23; and
the optical signal receiving method as set forth in any one of claims 24 to 27.

29. An optical signal relaying method for transferring an optical signal including a FM batch converted signal with a frequency-multiplexed first signal being frequency-modulated in batch and a second signal, the method includes receiving the optical signal including one of the FM batch converted signal and the second signal and adding it with the other signal to transmit, wherein:
the center frequency of the FM batch converted signal is set to be less than or equal to a value obtained by subtracting the half of the occupied frequency bandwidth of the FM batch converted signal and the half of the occupied frequency bandwidth of the second signal from the center frequency of the second signal.

30. The optical signal relaying method as set forth in claim 29, the method includes the step of:
multiplexing the optical signal including the FM batch converted signal and the optical signal including the second signal.

31. The optical signal relaying method as set forth in claim 30, wherein:
at the multiplexing step, the wavelength of the optical signal including the second signal and the wavelength of the optical signal including the FM batch converted signal are separated to reduce interference noise.

32. The optical signal relaying method as set forth in claim 29, the method includes the step of:
intensity-modulating the optical signal including the FM batch converted signal with the second signal.

33. The optical signal relaying method as set forth in claim 29, the method includes the step of:
intensity-modulating the optical signal including the second signal with the FM batch converted signal.

34. An optical signal transmission method comprising:
the optical signal relaying method as set forth in any one of claims 29 to 33; and
the optical signal receiving method as set forth in any one of claims 24 to 27.
